# EUROPEAN PATENT APPLICATION

(11) **EP 3 499 811 A1**
(43) Date of publication of application: **19.06.2019**
(21) Application number: 17206901.5
(22) Date of filing: 13.12.2017
(51) Int. Cl.: H04L 12/58, H04M 7/00, H04W 76/16, H04W 12/02

(54) **PROVIDING SECURE COMMUNICATING DURING A VOICE CALL BY USING MESSAGING APPLICATIONS**

(71) Applicant: Vestel Elektronik Sanayi ve Ticaret A.S., 45030 Manisa (TR)
(72) Inventor: CUBUKCU, Baran, 45030 Manisa (TR)
(74) Representative: Ascherl, Andreas

(57) **Abstract**

The present invention provides a method for providing secure communicating during a voice call (112) between a first communication device (101, 102) and a second communication device (101, 102), the method comprising determining (S1) which messaging applications (109, 110) for written communication are installed on the first communication device (101, 102) and on the second communication device (101, 102), exchanging (S2) information (113, 114) about the installed messaging applications (109, 110) between the first communication device (101, 102) and the second communication device (101, 102), and providing (S3, S12) access elements (115, 116, 117, 118, 119, 120) to those of the messaging applications (109, 110) that are installed on the first communication device (101, 102) and on the second communication device (101, 102) on a user interface (103, 104) of the first communication device (101, 102) and on a user interface (103, 104) of the second communication device (101, 102). Further, the present invention provides a communication device (101, 102) and a respective communication system (100).

## Description

### TECHNICAL FIELD

The invention relates to a method for providing secure communicating during a voice call. Further, the invention relates to a communication device and a communication system.

### BACKGROUND

Although applicable to any communication system, the present invention will mainly be described in conjunction with mobile phone conversations.

Today people may perform voice calls at almost any place at any time. However, depending on the location from which a voice call is performed, a plurality of other people may be within earshot. If a person wants to communicate confidential or private information during a voice call, this may not be possible at such places. Other people may listen in on the conversation and grasp the confidential or private information.

If for example a person is asked in a voice call for financial details, like e.g. a monthly salary, or medical details, like e.g. a health status, the person may not want to explain this details via phone while being in a public place.

Accordingly, there is a need for providing confidential communication during a voice call.

### SUMMARY OF THE INVENTION

The present invention provides a method with the features of claim 1, a communication device with the features of claim 9, and a communication system with the features of claim 15.

Accordingly, it is provided:
A method for providing secure communicating during a voice call between a first communication device and a second communication device, the method comprising determining which messaging applications for written communication are installed on the first communication device and on the second communication device, exchanging information about the installed messaging applications between the first communication device and the second communication device, and providing access elements to those of the messaging applications that are installed on the first communication device and on the second communication device on a user interface of the first communication device and on a user interface of the second communication device.

Further, it is provided:
A communication device for providing secure communicating during a voice call with another communication device, the communication device comprising a user interface, and a control unit, the control unit being configured to determine which messaging applications for written communication are installed on the first communication device and on the second communication device, and exchange information about the installed messaging applications with the other communication device and receive respective information from the other communication device, and provide access elements to those of the messaging applications that are installed on the communication device and on the other communication device on the user interface.

Finally, it is provide:
A communication system for providing secure communicating during a voice call, the communication system comprising a first communication device according to the present invention, and a second communication device according to the present invention, wherein the first communication device and the second communication device are configured to perform a voice call with each other.

The present invention is based on the finding that it is difficult in public places to perform confidential communication while at the same time performing a voice call.

To allow parallel confidential communication that may be performed while at the same time performing a voice call, the present invention provides the method for providing secure communication and the respective communication devices.

According to the present invention it is verified which messaging applications are installed on the two devices that engage in a voice call. It is understood, that the term voice call in this regard refers to any type of call that allows spoken communication. Therefore a voice call may also be a video call with voice communication or the like. The term messaging application in contrast refers to any type of application that allows written communication between the two communication devices. Such applications may include instant messaging applications, messengers, short message service, SMS, applications, e-mail applications or the like.

After determining which messaging applications are installed on both communication devices, the information about the installed messaging applications is exchanged between the two communication devices. Both communication devices then provide access elements only to those messaging applications that are installed in both communication devices on their respective user interfaces.

Determining which messaging applications are installed on both communication devices may simply be performed by comparing the lists of the installed messaging applications of the first and the second communication device and selecting the messaging applications that appear on both lists.

An access element allows a user to quickly access the respective messaging application on one of the communication devices and write a message that may then be sent to the other communication device.

Such messaging applications may e.g. include server based messaging applications, where a central server coordinates the single clients, e.g. communication devices. Such messaging applications are usually internet-based and may be installed e.g. on smartphone, Tablet-PCs or standard PCs as applications. Other messaging applications may e.g. comprise direct or point-to-point based communication applications, like e.g. SMS. Such applications may e.g. be preloaded or tightly integrated into the operating system of a communication device like e.g. a smartphone. It is however understood, that point-to-point messaging applications may also be user installed applications.

In the context of the present invention, a communication device may be any type of device that allows a user to perform a voice call or voice conversation with a user of another communication device. It is further understood, that the first communication device and the second communication device may be the same type of device or may be different devices. Possible communication devices include but are not limited to smartphones, mobile phones, Tablet-PCs, laptop computers, office computers and the like. For example, the first communication device may be a smartphone and the second communication device may e.g. be a computer.

With the present invention the user may quickly switch between a voice conversation and a written or message based communication. If the communication devices comprise respective speaker and microphone arrangements for performing hands-free voice calls or headsets, the voice conversation and the message based conversation may be performed in parallel.

The message based conversation via one of the messaging applications that are installed on both of the communication devices is a communication that in public places is confidential compared to a voice communication, because no one may listen in on the message based conversation. In addition, the user of the communication device may shield the screen of the communication device from other people's views easily.

Further embodiments of the present invention are subject of the further subclaims and of the following description, referring to the drawings.

In an embodiment, the access elements when accessed by a user may open the respective messaging application on the user interface of the respective communication device.

The access elements may be a kind of shortcut to the respective messaging application. This means that if a user activates the respective access element, the respective messaging application will be opened and brought to the front on a user interface of the respective communication device.

Depending on the capabilities of the communication devices, the voice call may either be put on hold while the user interacts with the respective messaging application or the voice call may continue while the user interacts with the respective messaging application.

If the communication device supports parallel voice communication and messaging, the voice communication may e.g. be continued in hands-free mode or via a headset while the user interacts with the messaging application.

In another embodiment, the access elements may comprise a text input element, wherein a text that is entered in one of the text input elements of one of the communication devices may be sent to the other communication device.

The text input elements may e.g. be text fields that are displayed on the user interface without opening the respective messaging application or bringing the messaging application to the front of the user interface. A user may therefore directly input a text into the respective text field that may then be instantaneously or on request be sent to the other communication device for display by the respective message application.

In contrast to opening up the respective messaging application, no application will be brought to the front of the user interface in this case and only the text input elements will be shown. If the first communication device and the second communication device share more than one messaging application, the user will see all respective text input elements directly on the screen of the respective device and may directly start typing in the text input element that pertains to the messaging application that the user wants to use.

It is understood, that a scroll bar may be provided at a side of the user interface if more text input elements must be shown than fit on the screen of the respective communication device.

In a further embodiment, determining and exchanging may be performed while or after a voice call is established.

Determining which messaging applications are shared by the first communication device and the second communication device may e.g. be performed by transmitting a list of the installed messaging applications from the communication device that initiates the voice call to the other communication device. The list may e.g. be provided via the same communication channel that is used to establish the voice call or via another communication channel, e.g. via a dedicated server as intermediary communication device, via SMS or the like.

It is also possible to transmit the required information in the voice call, e.g. prior to establishing a voice channel, e.g. via a DTMF, Dual-tone multi-frequency signaling, or a communication method as used by modems. As alternative a data communication, e.g. a GPRS communication, may e.g. be established by one of the communication devices or both communication devices.

In an embodiment, determining may be performed by querying an operating system of the communication devices for a list of installed messaging applications.

Operating systems, especially of mobile devices like smartphones, may allow querying the operating system for a list of messaging applications. When a call is established, the operating system may therefore be queried for such a list e.g. by using an API function that returns the respective list of messaging applications.

As alternative, the method may involve a trial and error determination that involves trying to launch every messaging application of a known list of messaging applications. If the respective messaging application is available, the messaging application will be started. If the respective messaging application is not available, the operating system of the respective communication device will provide a respective error notification.

It is understood, that every one of the communication devices may use its own method for determining which messaging applications are installed on the respective communication device.

In another embodiment, the method may comprise determining which messaging applications are installed on the first communication device and the second communication device by querying messaging applications that allow verifying if a communication partner has the respective messaging application installed on at least one of the communication devices.

There exist messaging applications that allow other applications or the user to determine if a possible communication partner has the same messaging application installed on his communication device.

A messaging application may for example provide respective flags or information in a contact list of the respective communication device that indicate that the respective communication partner has the same messaging application installed on his communication device. Some messaging applications also allow directly initiating a messaging session with a communication partner e.g. from the contact list of the respective communication device. In case the communication partner has the messaging application installed, a messaging session will be opened. If however, the respective messaging application is not installed on the communication device of the communication partner, an error message will be provided or an invitation may be sent to the communication partner to install the respective application on his communication device.

It is therefore possible with some messaging applications to determine if a possible communication partner has the respective messaging application installed on his communication device. A list of messaging applications that are installed on the first communication device and the second communication device may therefore, at least for the above mentioned messaging applications, be locally generated on both of the communication devices without any additional necessary data communication before establishing the voice call. In such an embodiment, the steps of determining and exchanging are performed as a single step of testing if a communication partner, i.e. the respective communication device, is reachable via a respective messaging application. The respective access elements may then be provided directly on the user interface when the voice call is established without any further communication between the first and the second communication device.

In a further embodiment, exchanging may be performed via one of the installed messaging applications on one of the communication devices, especially a messaging application that is installed on the other communication device and that allows determining if the other communication device has the same messaging application installed.

As already indicated above, some messaging applications allow determining if a communication partner has the same messaging application installed or not. Therefore, such a messaging application that is installed on both communication devices may be used to transfer a list of all messaging applications that are installed on the respective communication device to the other communication device. The information about all possible or available messaging applications will therefore be readily available on both communication devices.

In an embodiment, the method may comprise providing access elements to user selectable applications on a user interface of at least one of the communication devices, especially a notes or sketch application, that are installed on the respective communication device.

In addition to the access elements for the messaging applications, other access elements e.g. to a notepad or a sketching application or the like may also be provided on the user interface of the respective communication device while a voice call is performed. A user may select such additional access elements e.g. in a configuration menu of the respective communication device.

It is understood, that these applications may be applications that allow shared operation, i.e. that allow more than one user to work on the same e.g. note or sketch. If the respective application is installed only on one of the communication devices, a query for installing the respective application may be shown on the user interface of the other communication device.

It is understood, that the above described method according to the present invention may e.g. be integrated in a voice call application that may e.g. be installed on a smartphone or into a program that is used on a tablet-pc or office computer to perform voice calls, e.g. an IP-phone software or the like.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a flow diagram of an embodiment of a method according to the present invention;
Fig. 2 shows a flow diagram of another embodiment of a method according to the present invention; and
Fig. 3 shows a block diagram of an embodiment of a communication system according to the present invention.

In the figures like reference signs denote like elements unless stated otherwise.

### DETAILED DESCRIPTION OF THE DRAWINGS

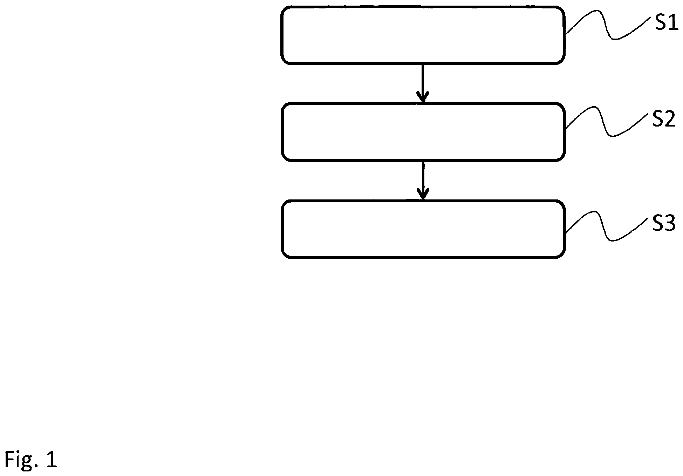

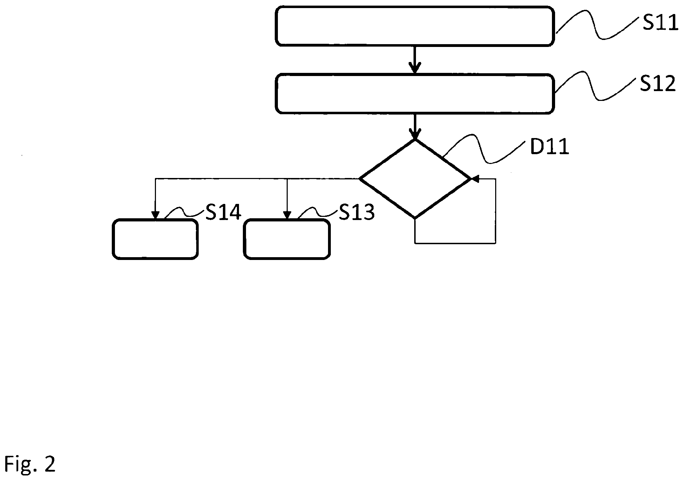

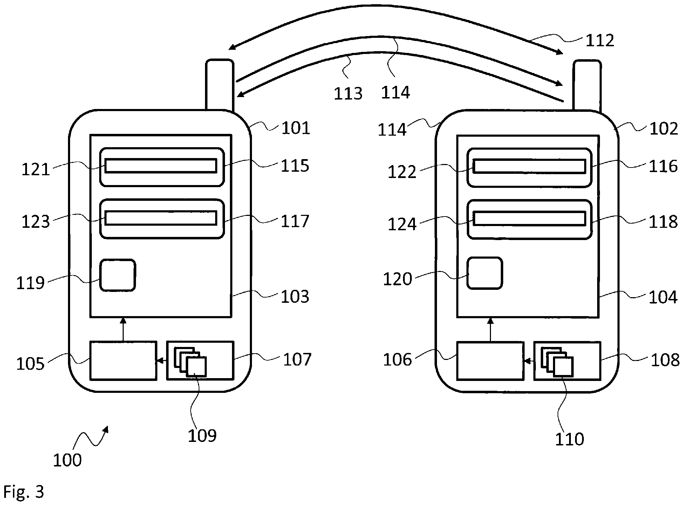

For sake of clarity in the following description of the method based Figs. 1 and 2 the reference signs used in the description of apparatus based Fig. 3 will be maintained. Fig. 1 shows a flow diagram of an embodiment of a method for providing secure communicating during a voice call 112 between a first communication device 101, 102 and a second communication device 101, 102.

The method comprises determining S1 which messaging applications 109, 110 for written communication are installed on the first communication device 101, 102 and on the second communication device 101, 102, exchanging S2 information 113, 114 about the installed messaging applications 109, 110 between the first communication device 101, 102 and the second communication device 101, 102, and providing S3, S12 access elements 115, 116, 117, 118, 119, 120 to those of the messaging applications 109, 110 that are installed on the first communication device 101, 102 and on the second communication device 101, 102 on a user interface 103, 104 of the first communication device 101, 102 and on a user interface 103, 104 of the second communication device 101, 102.

It is understood, that the access elements 115, 116, 117, 118, 119, 120 when accessed by a user may e.g. open S13 the respective messaging application 109, 110 on the user interface 103, 104 of the respective communication device 101, 102. In addition or as alternative, other access elements 115, 116, 117, 118, 119, 120 may comprise a text input element 121, 122, 123, 124, wherein a text that is entered in one of the text input elements 121, 122, 123, 124 of one of the communication devices 101, 102 is sent S14 to the other communication device 101, 102.

Determining S1 and exchanging S2 may be performed while or after a voice call 112 is established. Determining S1 may e.g. be performed by querying an operating system of the communication devices 101, 102 for a list of installed messaging applications 109, 110. Determining S11 which messaging applications 109, 110 are installed on the first communication device 101, 102 and the second communication device 101, 102 may also be performed by querying messaging applications 109, 110 that allow verifying if a communication partner has the respective messaging application 109, 110 installed on at least one of the communication devices 101, 102.

Exchanging S2 may either be performed via a dedicated communication channel or may be performed via one of the installed messaging applications 109, 110 on one of the communication devices 101, 102, especially a messaging application 109, 110 that is also installed on the other communication device 101, 102 and that allows determining if the other communication device 101, 102 has the same messaging application 109, 110 installed.

Further, the method may comprise providing access elements 115, 116, 117, 118, 119, 120 to user selectable applications on a user interface 103, 104 of at least one of the communication devices 101, 102, especially a notes or sketch application, that are installed on the respective communication device 101, 102.

Fig. 2 shows a flow diagram of another embodiment of a method for providing secure communicating during a voice call 112.

In the method of Fig. 2 the steps of determining and exchanging are unified into step S11. In step S11 it is verified, if a messaging application 109, 110 allows determining if the other communication device 101, 102 has the same messaging application 109, 110 installed and is installed on both communication devices 101, 102. If this is actually the case, i.e. the messaging application 109, 110 is installed on the first and the second communication device 101, 102, the respective information 113, 114 is directly transmitted to the other communication device 101, 102 via the messaging application 109, 110, e.g. during call establishment for the voice call. In step S12 the access elements 115, 116, 117, 118, 119, 120 are provided on the user interfaces 103, 104 of the communication devices 101, 102.

In decision D11 it is verified if any of the access elements 115, 116, 117, 118, 119, 120 are activated by the user or if text is input into any of the access elements 115, 116, 117, 118, 119, 120, depending on the type of access element 115, 116, 117, 118, 119, 120.

If one of the access elements 115, 116, 117, 118, 119, 120 that links to a messaging application 109, 110 is activated, in step S13 the respective application is launched. If one of the access elements 115, 116, 117, 118, 119, 120 that comprises a text input element 121, 122, 123, 124 is provided with a text by the user, this text is transmitted to the other communication device 101, 102 in step S14.

Fig. 3 shows a block diagram of an embodiment of a communication system 100. The communication system 100 comprises two communication devices 101, 102. Although shown as two identical communication devices 101, 102, it is understood, that the communication devices 101, 102 may also be two different communication devices. In the following one of the communication devices 101, 102 is described, but it is understood, that the explanations apply to both the communication devices 101, 102.

The communication devices 101, 102 each comprise a user interface 103, 104, a memory 107, 108 and a control unit 105, 106 that is coupled to the user interface 103, 104 and the memory 107, 108. The memory 107, 108 comprises a plurality of messaging applications 109, 110 that may be executed by the control unit 105, 106. It is understood, that the further elements required to perform a communication between the two communication devices 101, 102 are not explained in detail. However, such further elements may comprise e.g. the communication system as provided in mobile phones, smartphones or tablet PCs, or e.g. a computer with a software based SIP phone or the like.

The two communication devices 101, 102 are both engaged in a voice call 112 with each other. While establishing the voice call 112 or at the beginning of the voice call 112 or on a user request the control unit 105, 106 may determine, which messaging applications 109, 110 are installed on the communication device 101, 102. This information 113, 114 may then be provided by the control unit 105, 106 to the other communication device 101, 102.

In both communication devices 101, 102 the control unit 105, 106 may then determine, which of the messaging applications 109, 110 are installed on both of the communication devices 101, 102. For those messaging application 109, 110 the control unit 105, 106 may then provide respective access elements 115, 116, 117, 118, 119, 120 on the user interface 103, 104.

The access elements 115, 116, 117, 118, 119, 120 may e.g. be shown in the form of simple buttons, like one of the access elements 119, 120 or in the form of one of the access elements 115, 116, 117, 118 with text input elements 121, 122, 123, 124. The access elements 119, 120 when accessed or activated by a user will initiate the start of the respective messaging application 109, 110 by the control unit 105, 106. In contrast, a user may directly enter text into the text input elements 121, 122, 123, 124 of the access elements 115, 116, 117, 118. This text may then automatically be sent to the other communication device 101, 102 for display to the respective user.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a method for providing secure communicating during a voice call 112 between a first communication device 101, 102 and a second communication device 101, 102, the method comprising determining S1 which messaging applications 109, 110 for written communication are installed on the first communication device 101, 102 and on the second communication device 101, 102, exchanging S2 information 113, 114 about the installed messaging applications 109, 110 between the first communication device 101, 102 and the second communication device 101, 102, and providing S3, S12 access elements 115, 116, 117, 118, 119, 120 to those of the messaging applications 109, 110 that are installed on the first communication device 101, 102 and on the second communication device 101, 102 on a user interface 103, 104 of the first communication device 101, 102 and on a user interface 103, 104 of the second communication device 101, 102. Further, the present invention provides a communication device 101, 102 and a respective communication system 100.

### List of reference signs

- 100: communication system
- 101, 102: communication device
- 103, 104: user interface
- 105, 106: control unit
- 107, 108: memory
- 109, 110: messaging applications
- 112: voice call
- 113, 114: information
- 115, 116, 117, 118, 119, 120: access elements
- 121, 122, 123, 124: text input element
- S1, S2, S3: method steps
- S11, S12, S13, S14: method steps
- D11: decision

## Claims

1. Method for providing secure communicating during a voice call (112) between a first communication device (101, 102) and a second communication device (101, 102), the method comprising:
determining (S1) which messaging applications (109, 110) for written communication are installed on the first communication device (101, 102) and on the second communication device (101, 102),
exchanging (S2) information (113, 114) about the installed messaging applications (109, 110) between the first communication device (101, 102) and the second communication device (101, 102), and
providing (S3, S12) access elements (115, 116, 117, 118, 119, 120) to those of the messaging applications (109, 110) that are installed on the first communication device (101, 102) and on the second communication device (101, 102) on a user interface (103, 104) of the first communication device (101, 102) and on a user interface (103, 104) of the second communication device (101, 102).

2. Method according to claim 1, wherein the access elements (115, 116, 117, 118, 119, 120) when accessed by a user open (S13) the respective messaging application (109, 110) on the user interface (103, 104) of the respective communication device (101, 102).

3. Method according to claim 1, wherein the access elements (115, 116, 117, 118, 119, 120) comprise a text input element, wherein a text that is entered in one of the text input elements of one of the communication devices (101, 102) is sent (S14) to the other communication device (101, 102).

4. Method according to any one of the preceding claims, wherein determining (S1) and exchanging are performed while or after a voice call (112) is established.

5. Method according to any one of the preceding claims, wherein determining (S1) is performed by querying an operating system of the communication devices (101, 102) for a list of installed messaging applications (109, 110).

6. Method according to any one of the preceding claims, comprising determining (S11) which messaging applications (109, 110) are installed on the first communication device (101, 102) and the second communication device (101, 102) by querying messaging applications (109, 110) that allow verifying if a communication partner has the respective messaging application (109, 110) installed on at least one of the communication devices (101, 102).

7. Method according to any one of the preceding claims, wherein exchanging (S2) is performed via one of the installed messaging applications (109, 110) on one of the communication devices (101, 102), especially a messaging application (109, 110) that is installed on the other communication device (101, 102) and that allows determining if the other communication device (101, 102) has the same messaging application (109, 110) installed.

8. Method according to any one of the preceding claims, comprising providing access elements (115, 116, 117, 118, 119, 120) to user selectable applications on a user interface (103, 104) of at least one of the communication devices (101, 102), especially a notes or sketch application, that are installed on the respective communication device (101, 102).

9. Communication device (101, 102) for providing secure communicating during a voice call (112) with another communication device (101, 102), the communication device (101, 102) comprising:
a user interface (103, 104), and
a control unit (105, 106), the control unit (105, 106) being configured to determine which messaging applications (109, 110) for written communication are installed on the first communication device (101, 102) and on the second communication device (101, 102), and exchange information (113, 114) about the installed messaging applications (109, 110) with the other communication device (101, 102) and receive respective information (113, 114) from the other communication device (101, 102), and provide access elements (115, 116, 117, 118, 119, 120) to those of the messaging applications (109, 110) that are installed on the communication device (101, 102) and on the other communication device (101, 102) on the user interface (103, 104).

10. Communication device (101, 102) according to claim 9, wherein the control unit (105, 106) is configured to open the respective messaging application (109, 110) on the user interface (103, 104) of the respective communication device (101, 102) when the respective access element (115, 116, 117, 118, 119, 120) is accessed by a user; and/or
wherein the access elements (115, 116, 117, 118, 119, 120) comprise a text input element, and wherein the control unit (105, 106) is configured to send a text that is entered in one of the text input element by a user to the other communication device (101, 102).

11. Communication device (101, 102) according to any one of the preceding claims 9 to 10, wherein the control unit (105, 106) is configured to determine the installed messaging applications (109, 110) and exchange the respective information (113, 114) with the other communication device (101, 102) while or after a voice call (112) is established.

12. Communication device (101, 102) according to any one of the preceding claims 9 to 11, wherein the control unit (105, 106) is configured to determine the installed messaging applications (109, 110) by querying an operating system of the communication devices (101, 102) for a list of installed messaging applications (109, 110); and/or
wherein the control unit (105, 106) is configured to determine which messaging applications (109, 110) are installed on the first communication device (101, 102) and the second communication device (101, 102) by querying messaging applications (109, 110) that allow verifying if a communication partner has the respective messaging application (109, 110) installed on at least one of the communication devices (101, 102).

13. Communication device (101, 102) according to any one of the preceding claims 9 to 12, wherein the control unit (105, 106) is configured to exchange the information (113, 114) about the installed messaging applications (109, 110) via one of the installed messaging applications (109, 110), especially a messaging application (109, 110) that is also installed on the other communication device (101, 102) and that allows determining if the other communication device (101, 102) has the same messaging application (109, 110) installed.

14. Communication device (101, 102) according to any one of the preceding claims 9 to 13, wherein the control unit (105, 106) is configured to provide access elements (115, 116, 117, 118, 119, 120) to user selectable applications on the user interface (103, 104), especially a note or sketch application.

15. Communication system (100) for providing secure communicating during a voice call (112), the communication system (100) comprising:
a first communication device (101, 102) according to any one of the preceding claims 9 to 14, and
a second communication device (101, 102) according to any one of the preceding claims 9 to 14,
wherein the first communication device (101, 102) and the second communication device (101, 102) are configured to perform a voice call (112) with each other.
